# EUROPÄISCHE PATENTSCHRIFT

(11) **EP 1 203 930 B1**
(45) Veröffentlichungstag und Bekanntmachung des Hinweises auf die Patenterteilung: **07.02.2007**
(21) Anmeldenummer: 00127506.4
(22) Anmeldetag: 15.12.2000
(51) Int. Cl.: G01C 15/00

(54) **Verfahren und Vorrichtung zum Ausrichten eines von einem Rotationslaser erzeugten Lichtstrahls**
Method and device for aligning a light beam generated by a rotation laser
Procédé et dispositif pour aligner un rayon de lumière généré par un laser à rotation

(30) Priorität: 03.11.2000 DE 10054627
(43) Veröffentlichungstag der Anmeldung: 08.05.2002
(73) Patentinhaber: NEDO GmbH & Co. KG, 72280 Dornstetten (DE)
(72) Erfinder: Fischer, Thomas, Dr., 72280 Dornstetten (DE)
(74) Vertreter: RACKETTE Partnerschaft Patentanwälte

(56) Entgegenhaltungen:
- EP-A- 0 854 351
- EP-A- 0 957 338
- WO-A-96/01978
- US-A- 3 242 340
- US-A- 3 790 277
- US-A- 5 294 970
- US-A- 5 742 385

## Beschreibung

Die vorliegende Erfindung betrifft ein Verfahren zum Ausrichten eines von einem Rotationslaser erzeugten Laserstrahl auf eine vorgegebene Linie bzw. eine von einem Rotationslaser erzeugten Ebene an einer vorgegebenen Fläche mit einem oder mehreren entfernt von dem Rotationslaser angeordneten Laserempfängern und einer in dem Laserempfängergehäuse angeordneten Fernsteuerung für den Rotationslaser sowie eine Vorrichtung zum Ausrichten eines Rotationslasers.

Ein vollautomatischer Rotationslaser mit elektronischen Libellen wird normalerweise eingesetzt, um eine waagerechte oder senkrechte (Laser-) Ebene zu erzeugen. In Sonderfällen ist es aber wünschenswert, dass eine Laserebene verwendet wird, die nicht waagrecht bzw. senkrecht ist, sondern sich an eine vorgegebene Fläche oder Linie orientiert. Dies ist beispielsweise dann der Fall, wenn es sich um den Einbau einer Decke handelt, die parallel zu einer alten Decke verlaufen soll, wobei die alte Decke selbst nicht waagrecht ist. Weitere Anwendungen sind der Einbau einer Wand, die parallel zu einer vorhandenen Wand verlaufen soll, oder das Verlegen von Fliesen entlang einer vorgegebenen Paarlinie (parallel zu einer Wand etc.).

Um diese zu bewerkstelligen, wurde bisher der Rotationslaser an einer Stelle aufgestellt und im folgenden so gedreht bzw. geschwenkt, dass der Laserstrahl bzw. die Laserebene entlang der vorgegebenen Linie bzw. die Laserebene parallel zu der vorgegebenen Fläche verläuft. Insbesondere bei langen Strecken erweist sich das bisherige Verfahren als sehr zeitaufwendig. Außerdem ist dieser Vorgang rationell nur mit zwei Personen durchzuführen, wobei die eine Person am vom Rotationslaser entfernten Punkt Anweisungen gibt, wieweit und in welche Richtung der Laser zu drehen ist, während die zweite Person den Laser entsprechend diesen Anweisungen dreht.

Rotationslaser mit einer Fernbedienung, mit der mittels eines im Rotationslasergehäuse angeordneten Verstellmechanismus die Laserebene in einem bestimmten Bereich geschwenkt werden kann, sind bekannt. Es sind auch Rotationslaser auf dem Markt erhältlich, die über eine Infrarotfernbedienung, die in dem Laserempfängergehäuse untergebracht ist, ein- und ausgeschaltet werden können. Des weiteren gibt es auf dem Markt Rotationslaser, die ein Infrarotfernbedienung haben, mit der manuell die Laserebene (auch in zwei Achsen) eingestellt werden kann. Hier muss der Laserstrahl visuell detektiert werden. Der Anwender muss manuell selbst in den Regelkreislauf eingreifen und den Laserstrahl am entfernten Ort beobachten. Entsprechend der Abweichung des Laserstrahls von der gewünschten Position, muss der Anwender mit der Fernbedienung manuell die Laserebene bzw. den Laserstrahl so einstellen, dass der Laserstrahl parallel zur vorgegebenen Linie bzw. parallel zur vorgegebenen Fläche verläuft. In diesem Fall kann der Anwender zwar allein (eine Person) arbeiten, aber das manuelle Einstellen ist sehr langwierig und schwierig. Außerdem hängt die erzielbare Genauigkeit vom Anwender ab. Mittels diesen bekannten Rotationslasern kann die vorstehend beschriebene Arbeitsweise nicht wesentlich vereinfacht werden, da weiterhin zwei Personen zum Ausrichten der Laserebene in den vorstehend erwähnten Sonderfällen erforderlich sind.

Aus US-5742385 und WO96/01978 ist ein Verfahren zum Ausrichten eines Rotationslasers an einem Rotationslasergehäuse bekannt mit einem entfernt von dem Rotationslaser angeordneten Laserempfänger und einer in dem Laserempfängergehäuse angeordneten Fernsteuerung für den Rotationslaser, in dem auf den Laserempfänger an dem entfernten Punkt ein rotierender Laserstrahl des Rotationslasers gerichtet wird, das von dem Laserempfänger erzeugte Signal hinsichtlich des Auftrefforts des Laserstrahls in Bezug zu einer Kalibriermarke an dem Laserempfänger zu dem Rotationslaser zurückgesandt und der Rotationslaser entsprechend mittels eines im Rotationslasergehäuse angeordneten Verstellmechanismus in seiner Lage so lange verändert wird, bis der Laserstrahl auf die Kalibriermarke trifft.

Der vorliegenden Erfindung liegt in daher die Aufgabe zugrunde, eine Möglichkeit vorzuschlagen, mit der der vorstehend beschriebene Vorgang schneller und genauer als bisher durchgeführt werden kann.

Diese Aufgabe wird durch das Erfindungsgemäße Verfahren mit den Merkmalen des Anspruchs 1 sowie der Vorrichtung des Anspruchs 9 gelöst. Weitere vorteilhafte Ausgestaltungen sind in den entsprechenden rückbezogenen abhängigen Ansprüchen angegeben.

Gemäß dem Verfahren wird das von dem Laserempfänger empfangene Signal hinsichtlich seiner Lage zu einer Kalibriermarke an dem Laserempfänger zu dem Rotationslaser zurückgesandt und der Rotationslaser entsprechend mittels eines im Rotationslasergehäuse angeordneten Verstellmechanismus in seiner Lage so lange verändert, bis der Laserstrahl auf die Kalibriermarke trifft.

Die Anpassung der Laserebene erfolgt mit Hilfe eines bekannten Laserempfängers, die eingesetzt werden, um einen Laserstrahl zu detektieren. Sie besitzen in einem Detektorfeld eine Reihe von Fotodioden, die sehr viel empfindlicher als das menschliche Auge einen Laserstrahl wahrnehmen können. Der Laserempfänger zeigt dem Anwender an, ob der Laserstrahl oberhalb einer Kalibriermarke, die im Allgemeinen als "Nullmarke" bezeichnet wird, unterhalb oder direkt auf der Kalibriermarke am Empfänger auftrifft. Zusätzlich ist in dem Laserempfängergehäuse eine Fernbedienung untergebracht, die z.B. über Funk, Infrarot, per Kabelanschluss oder mittels eines anderen geeigneten Verfahrens Signale zu dem Rotationslasergehäuse überträgt. Mit Hilfe dieser Fernbedienung ist es möglich, Funktionen des Lasers zu steuern. Die von dem Laserempfänger gelieferten Signale werden zu einer Auswerteelektronik übertragen, die sich entweder in dem Laserempfängergehäuse oder in dem Rotationslasergehäuse befindet. Abhängig vom Auftreffort des Laserstrahls wird ein Positionssignal erzeugt. Aus diesem wird mittels einer Auswerteelektronik die Lage in bezug zu der Kalibriermarke am Laserempfänger ermittelt und ein entsprechendes Steuersignal für den Verstellmechanismus erzeugt.

Damit ist es möglich, die Laserebene so zu beeinflussen, dass sie eine gewünschte Lage einnimmt. Es spielt dabei keine Rolle, ob es sich um eine Ebene in der Horizontalen, der Vertikalen oder dazwischen handelt. Es können eine oder zwei Achsen mittels eines derartigen Mechanismus gesteuert werden. Die Verstellung des Laserkopfes erfolgt in bekannter Art und Weise mittels in dem Rotationslasergehäuse angeordneten Stellmotoren.

Gemäß dem erfindungsgemässen Verfahren wird vor der Ausrichtung der Laserebene auf den Kalibrierpunkt des Laserempfängers die Lage des Empfängers in Bezug auf den Laserstrahl ermittelt. Diese Richtungskalibrierung ist notwendig, um die Lage des Laserempfängers in Bezug auf den Rotationslaser zu ermitteln, da beispielsweise ein Steuersignal "hoch" aus der Sicht des Laserempfängers bei falscher Lage des Rotationslasers den Laserstrahl in die entgegengesetzte Richtung nach unten führen kann. Daher ist es wichtig, vor Beginn der automatischen Ausrichtung auf die Kalibriermarke, die Richtung festzulegen. Dabei wird vorzugsweise der Laserstrahl in eine beliebige Richtung des Laserempfängers bewegt und durch die Auswerteelektronik ermittelt, welcher Richtung die Bewegung des Laserstrahls auf dem Detektorfeld des Laserempfängers entspricht. Damit werden dann für die Einstellung auf die Kalibriermarke die für die Stellmotoren in ihrer Richtung richtigen Steuersignale generiert.

Gemäß einer vorteilhaften Ausbildung werden bei einer Unterbrechung des Laserstrahls, beispielsweise durch ein Baufahrzeug, für eine festgelegte Zeit keine Steuersignale an den Verstellmechanismus gesendet. Auf Grund dieser Unterbrechung werden dann vorteilhafter Weise entweder ein neuer Suchlauf gestartet, wobei durch ein entsprechendes Signal der Fernsteuerung der Rotationslaser den Laserstrahl zwischen den Endlagen hin- und herbewegt wird, mit dem Ziel, den Laserstrahl wieder auf die Kalibriermarke des Laserempfängers auszurichten, oder es wird bei einer längeren Unterbrechung durch ein markantes optisches und/oder akustisches Signal ein Fehler gemeldet. Dieses Signal muss vom Anwender abgestellt werden. Damit ist auf jeden Fall sichergestellt, dass der Rotationslaser keine unvorhersehbaren Aktionen ausführt, die zu einem falschen Ergebnis führen könnten.

Sobald der Laserstrahl auf die Kalibriermarke des Laserempfängers ausgerichtet ist, ist damit die automatische Ausrichtung beendet. Dieser Modus wird z.B. im Innenausbau beim Abhängen einer Decke usw. verwendet. Gemäß einer bevorzugten Ausführungsform ist es jedoch auch möglich, dass der Laserstrahl ständig durch entsprechende Steuersignale auf der Kalibriermarke gehalten wird. Dazu sendet der Laserempfänger ständig über die Auswerteelektronik Steuerbefehle an den Verstellmechanismus des Rotationslasers, um sicherzustellen, dass der Laserstrahl immer - auch bei Erschütterungen des Laserempfängers oder des Rotationslasers - auf der Nullmarke des Empfängers verharrt. Dieser Modus wird beispielsweise im Zusammenhang mit einem Schnurgerüst verwendet.

Grundsätzlich ist es möglich, die Übertragung der Steuerbefehle zwischen Laserempfänger und Rotationslaser beispielsweise durch Funk, Infrarot oder Kabel zu realisieren. Die Übertragung durch Infrarot ist stark richtungsabhängig und erfordert daher eine exakte Ausrichtung des Senders (Fernbedienung) auf den Empfänger (Rotationslaser). Dadurch ergibt sich oftmals ein eingeschränkter Aktionsradius. Auch die kabelgebundene Übertragung der Steuersignale ist umständlich und unpraktikabel. Gemäß einer bevorzugten Ausführungsform werden daher Signale von dem Laserempfängergehäuse zu dem Rotationslasergehäuse mittels Funk übertragen. Damit ist eine genaue Ausrichtung, wie im Falle von Infrarot auf das Rotationslasergehäuse nicht erforderlich. Vorzugsweise wird bei der Übertragung der Signale mittels Funk vor der Ausführung der Steuersignale eine Übertragungsfehlerüberprüfung durchgeführt, um die bei einer Funkübertragung auftretenden Störeinflüsse, beispielsweise durch ein Sprechfunkgerät usw., nicht auszuschließenden Störeinflüsse zu erkennen. Hierzu wird ein eigenes Übertragungsprotokoll, das die Erkennung von Übertragungsfehlern erlaubt, verwendet, so dass dem Verstellmechanismus des Rotationslasers nur dann ein Steuerbefehl zugeführt wird, wenn kein Übertragungsfehler aufgetreten ist.

Nachfolgend wird die Erfindung dann an das Ausführungsbeispiel näher erläutert. Es stellen dar:
- Figur 1: eine schematische Darstellung des Rotationslasers und des Laserempfängers bei der automatischen Ausrichtung;
- Figur 2: die schematische Darstellung gemäß Figur 1 mit verdrehtem Laserempfängergehäuse (Richtungskalibrierung); und
- Figur 3: ein Blockdiagramm an dem das Zusammenwirken der einzelnen Einrichtungen erkennbar ist.

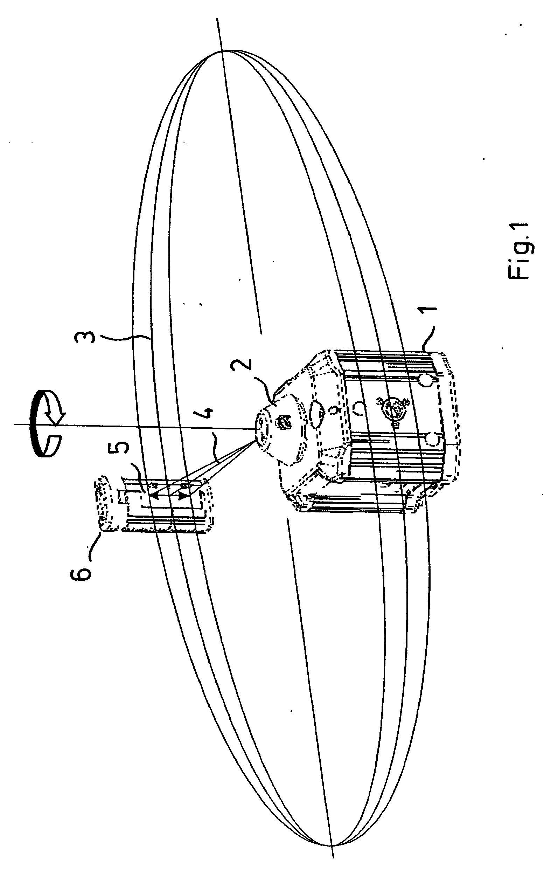

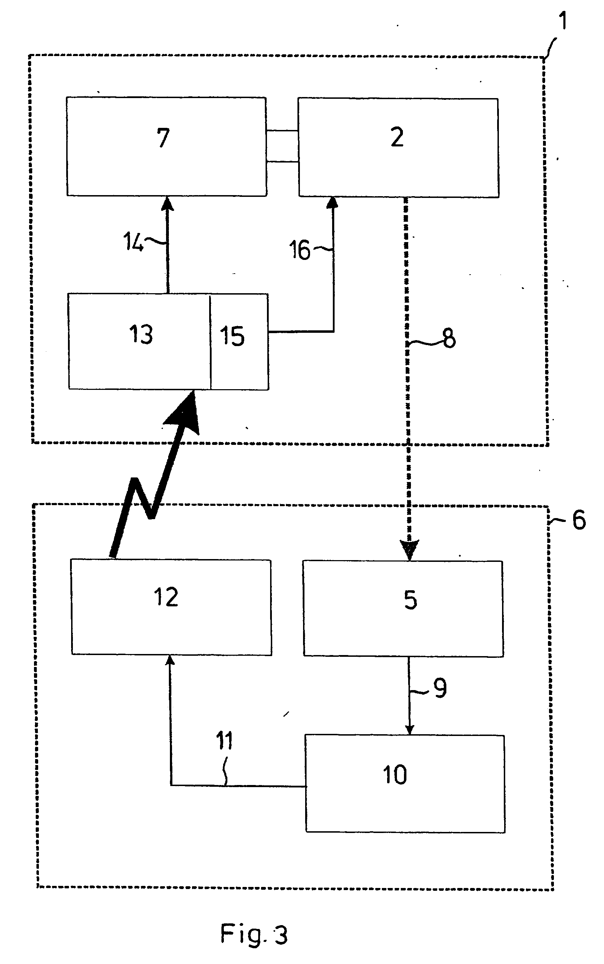

Figur 1 zeigt das Rotationslasergehäuse 1 mit dem Rotationslaser 2, der eine Laserstrahlebene 3 erzeugt, die in der Figur beispielhaft waagerecht ausgerichtet ist. In der dazu senkrechten Achse ist eine Verstellung möglich, die beispielsweise in einem Bereich von ± 5 Grad liegen kann. Der von dem Rotationslaser 2 ausgesandte Laserstrahl 4 trifft auf das Laserempfängergehäuse 6 mit dem Laserempfänger 5 (Figur 3). Die Signale vom Laserempfänger werden mittels Funk zu dem Rotationslasergehäuse 1 zurückübertragen und eine entsprechende Verstellung des Laserstrahls 4 ausgelöst.

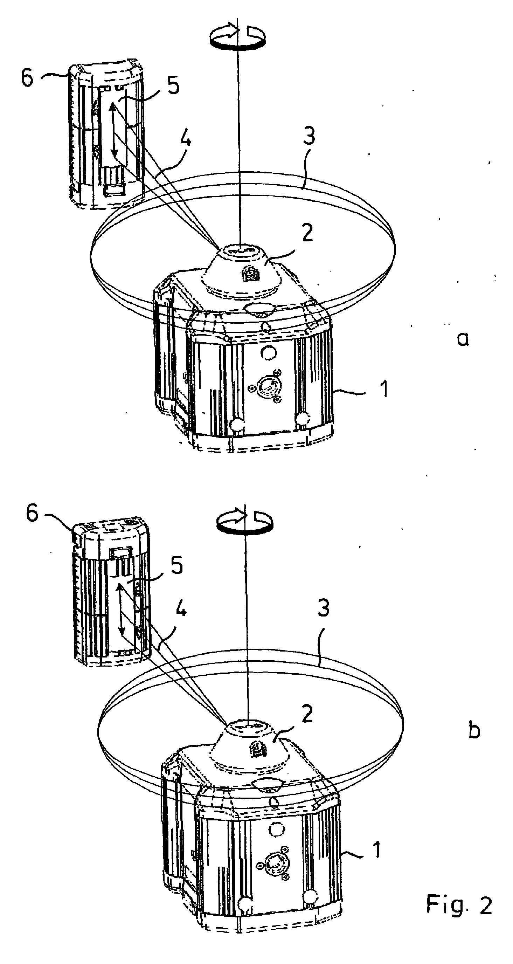

In den Figuren 2a und 2b ist das Laserempfängergehäuse 6 verschieden (entgegengesetzt) angeordnet. Um dies auszugleichen wird eine Richtungskalibrierung durchgeführt, wie sie oben und im Zusammenhang mit Figur 3 beschrieben ist.

Figur 3 zeigt als Blockschaltbild das Rotationslasergehäuse 1 und das Laserempfängergehäuse 6. In dem Rotationslasergehäuse 1 befindet sich der Rotationslaser 2, der mittels eines Verstellmechanismus in der Lage verstellt werden kann. Im Verstellmechanismus 7 sind noch zusätzliche Einrichtungen zugeordnet, die der Einstellung der Rotationsgeschwindigkeit, dem Ein/Ausschalten des Laserstrahls und dergleichen dienen.

Der von dem Rotationslaser 2 erzeugte rotierende Laserstrahl 8 trifft auf den Laserempfänger 5, üblicherweise ein Detektorfeld mit einzelnen Dioden. Das von dem Laserempfänger 5 erzeugte Positionssignal 9 wird zu einer Auswerteelektronik 10 übertragen, die abhängig von dem Positionssignal ein entsprechendes Steuersignal für den Verstellmechanismus 7 erzeugt. Das Steuersignal 11 wird von einem Fernbedienungssender 12 per Funk zu einem Fernbedienungsempfänger 13 übertragen. Das entsprechende Stellsignal 14 steuert den Verstellmechanismus 7. Durch entsprechende Tastatureingaben an der Fernbedienung im Laserempfängergehäuse 6 werden auf gleiche Art und Weise auch Steuersignale von dem Fernbedienungssender 12 zu dem Fernbedienungsempfänger 13 übertragen, um den Rotationslaser zu steuern.

Die Auswerteelektronik 10 ist außerdem in der Lage, eine Richtungskalibrierung zu steuern, um vor der Ausrichtung der Laserebene festzustellen, wie die Signale kodiert werden müssen, damit der Rotationslaser in die richtige Richtung bewegt wird. Dies bedeutet für den Anwender, dass es wie in den Figuren 2a und 2b dargestellt, keine Rolle spielt, wie er den Laserempfänger ausrichtet. Auch die übrige Steuerung der einzelnen Funktionsabläufe werden durch die Auswerteelektronik übernommen. Dem Fernbedienungsempfänger 13 ist eine zusätzliche Auswerteelektronik 15 zugeordnet, die überprüft, ob die Funkübertragung einwandfrei war. Diese nimmt auch über die Steuersignale 16 Einfluss auf den Rotationslaser 2, wenn es sich um sonstige Funktionen wie Ein/Ausschalten, Rotationsgeschwindigkeit oder dergleichen handelt.

## Patentansprüche

1. Verfahren zum Ausrichten eines Rotationslasers (2) an einem Rotationslasergehäuse (1) mit einem entfernt von dem Rotationslaser (2) angeordneten Laserempfänger (5) und einer in dem Laserempfängergehäuse (6) angeordneten Fernsteuerung für den Rotationslaser (2), in dem auf den Laserempfänger (5) an dem entfernten Punkt ein rotierender Laserstrahl (4, 8) des Rotationslasers (2) gerichtet wird, ein von dem Laserempfänger (7) erzeugtes Signal hinsichtlich des Auftrefforts des Laserstrahls (4, 8) in Bezug zu einer Kalibriermarke an dem Laserempfänger (7) zu dem Rotationslaser (2) zurückgesandt und der Rotationslaser (2) entsprechend mittels eines im Rotationslasergehäuse (1) angeordneten Verstellmechanismus (7) in seiner Lage so lange verändert wird, bis der Laserstrahl (4, 8) auf die Kalibriermarke trifft, **dadurch gekennzeichnet, dass** vor der Ausrichtung der Laserebene (3) auf den Kalibrierpunkt des Laserempfängers (5) die Lage des Laserempfängers (5) in Bezug auf den Rotationslaser (2) ermittelt wird und dass der Laserstrahl (4, 8) in eine beliebige Richtung am Laserempfänger (5) bewegt sowie durch eine Auswerteelektronik (10) ermittelt wird, welcher Richtung die Bewegung auf dem Laserempfänger (5) entspricht.

2. Verfahren nach Anspruch 1, **dadurch gekennzeichnet, dass** abhängig von dem Auftreffort des Laserstrahls (4, 8) ein Positionssignal erzeugt wird, mittels der Auswerteelektronik (10) die Lage in Bezug zu der Kalibriermarke am Laserempfänger (5) ermittelt wird, und mittels der Lage entsprechenden Steuersignalen der Verstellmechanismus (7) betätigt wird.

3. Verfahren nach einem der vorangegangenen Ansprüche, **dadurch gekennzeichnet, dass** bei einer Unterbrechung des Laserstrahls (4, 8) für eine bestimmte Zeit keine Steuersignale an den Verstellmechanismus (7) gesendet werden.

4. Verfahren nach Anspruch 3, **dadurch gekennzeichnet, dass** nach der Unterbrechung der Laserstrahl (4, 8) wieder auf die Kalibriermarke ausgerichtet wird.

5. Verfahren nach Anspruch 3, **dadurch gekennzeichnet, dass** eine optische und/oder akustische von dem Benutzer zu quittierende Fehlermeldung erzeugt wird.

6. Verfahren nach einem der vorangegangenen Ansprüche, **dadurch gekennzeichnet, dass** der Laserstrahl (4, 8) ständig durch entsprechende Steuersignale auf der Kalibriermarke gehalten wird.

7. Verfahren nach einem der vorangegangenen Ansprüche, **dadurch gekennzeichnet, dass** die Steuersignale von dem Laserempfängergehäuse (6) zu dem Rotationslasergehäuse (1) mittels Funk übertragen werden.

8. Verfahren nach Anspruch 7, **dadurch gekennzeichnet, dass** vor der Ausführung der Steuersignale eine Übertragungsfehlerüberprüfung durchgeführt wird.

9. Vorrichtung mit einem vollautomatischen Rotationslaser (2), mit einem über einen Fernbedienungsempfänger (13) ansteuerbaren Verstellmechanismus (7) zum Verstellen des Rotationslasers (2), mit einem entfernt von dem Rotationslaser (2) angeordneten Laserempfänger (5), mit einer an den Laserempfänger (5) angeschlossenen Auswerteelektronik (10) und mit einem mit der Auswerteelektronik (10) verbundenen Fernbedienungssender (12), mit dem der Verstellmechanismus (7) ansteuerbar ist, wobei der Laserempfänger (5) eine Kalibriermarke aufweist und mit der Auswerteelektronik (10) in Abhängigkeit der Lage des Auftreffortes eines von dem Rotationslaser (2) emittierten Laserstrahls (4, 8) auf dem Laserempfänger (5) ein Positionssignal erzeugbar ist, wobei über den Fernbedienungsempfänger (13) das Positionssignal derart in ein Stellsignal (14) umwandelbar ist, dass der Laserstrahl (4, 8) auf die Kalibriermarke fallend ausrichtbar ist, **dadurch gekennzeichnet, dass** die Auswerteelektronik (10) für eine Richtungskalibrierung dazu eingerichtet ist, in Abhängigkeit der Bewegungsrichtung des Laserstrahls (4, 8) in Bezug auf den Laserempfänger (5) Positionssignale zu generieren, die zu die Ausrichtung des Laserempfängers (5) in Bezug auf den Rotationslaser (2) berücksichtigenden Stellsignalen (14) führen.

## Claims

1. Method for aligning a rotation laser (2) on a rotation laser housing (1) having a laser receiver (5) disposed remote from the rotation laser (2) and a remote control for the rotation laser (2) disposed in the laser receiver housing (6), wherein a rotating laser beam (4, 8) from the rotation laser (2) is directed onto the laser receiver (5) at the remote point, a signal generated by the laser receiver (7) relating to the point of incidence of the laser beam (4, 8) in relation to a calibration mark on the laser receiver (7) is returned to the rotation laser (2) and the rotation laser (2) is modified in its position accordingly by means of an adjustment mechanism (7) disposed in the rotation laser housing (1) until the laser beam (4, 8) strikes the calibration mark, **characterised in that** before alignment of the laser plane (3) on the calibration point of the laser receiver (5), the position of the laser receiver (5) is determined in relation to the rotation laser (2) and that the laser beam (4, 8) is moved in any direction on the laser receiver (5) and analysis electronics (10) determine the direction corresponding to the movement on the laser receiver (5).

2. Method according to claim 1, **characterised in that** a position signal is generated as a function of the point of incidence of the laser beam (4, 8), the analysis electronics (10) determine the position in relation to the calibration mark on the laser receiver (5), and the adjustment mechanism (7) is activated by means of control signals corresponding to the position.

3. Method according to one of the preceding claims, **characterised in that** on an interruption to the laser beam (4, 8) for a particular time no control signals are sent to the adjustment mechanism (7).

4. Method according to claim 3, **characterised in that** after interruption the laser beam (4, 8) is aligned on the calibration mark again.

5. Method according to claim 3, **characterised in that** an optical and/or acoustic fault message, to be acknowledged by the user, is generated.

6. Method according to any of the preceding claims, **characterised in that** the laser beam (4, 8) is held constantly on the calibration mark by corresponding control signals.

7. Method according to any of the preceding claims, **characterised in that** the control signals are transmitted by the laser receiver housing (6) to the rotation laser housing (1) by radio.

8. Method according to claim (7), **characterised in that** before execution of the control signals, a transmission error check is performed.

9. Device with a fully automatic rotation laser (2), with an adjustment mechanism (7) that can be controlled by a remote control receiver (13) for adjusting the rotation laser (2), with a laser receiver (5) disposed remote from the rotation laser (2), with analysis electronics (10) connected to the laser receiver (5) and with a remote control transmitter (12) which is connected with the analysis electronics (10) and with which the adjustment mechanism (7) can be controlled, wherein the laser receiver (5) has a calibration mark and the analysis electronics (10) can generate a position signal as a function of the position of the point of incidence of a laser beam (4, 8) emitted by the rotation laser (2) on the laser receiver (5), wherein via the remote control receiver (13) the position signal can be converted into an adjustment signal (14) such that the laser beam (4, 8) can be aligned to strike the calibration mark, **characterised in that** the analysis electronics (10) for direction calibration are designed to generate, as a function of the movement direction of the laser beam (4, 8) in relation to the laser receiver (5), position signals which lead to adjustment signals (14) taking into account the alignment of the laser receiver (5) in relation to the rotation laser (2).

## Revendications

1. Procédé pour l'alignement d'un laser rotatif (2) au niveau d'un boîtier (1) de laser rotatif avec un récepteur de faisceau laser (5) disposé à distance du laser rotatif (2) et une commande à distance du laser rotatif (2) disposée dans le boîtier (6) du récepteur de faisceau laser, dans lequel un faisceau laser rotatif (4, 8) est dirigé sur le récepteur de faisceau laser (5) au point éloigné, un signal produit par le récepteur de faisceau laser (5) concernant le point d'incidence du faisceau laser (4, 8) par rapport à un repère de calibrage sur le récepteur de faisceau laser (5) est retourné au laser rotatif, et le laser rotatif, au moyen d'un mécanisme de réglage disposé dans le boîtier (1) du laser rotatif, modifie sa position en conséquence jusqu'à ce que le faisceau laser (4, 8) rencontre le repère de calibrage, **caractérisé en ce qu'**avant l'alignement du plan du laser (3) sur le repère de calibrage du récepteur de faisceau laser (5), on détermine la position du récepteur de faisceau laser (5) par rapport au laser rotatif (2), et **en ce que** le faisceau laser (4, 8) est déplacé dans n'importe quelle direction sur le récepteur de faisceau laser (5) ainsi qu'en ce qu'une électronique d'évaluation (10) détermine à quelle direction correspond le déplacement sur le récepteur de faisceau laser (5).

2. Procédé selon la revendication 1, **caractérisé en ce qu'**un signal de position est généré en fonction du point d'incidence du faisceau laser (4, 8), que la position par rapport au repère de calibrage sur le récepteur de faisceau laser (5) est déterminée par l'électronique de commande (10), et que le mécanisme de réglage (7) est actionné au moyen de signaux de commande correspondant à la position.

3. Procédé selon une des revendications précédentes, **caractérisé en ce qu'**en cas d'interruption du faisceau laser (4, 8) pendant un temps déterminé, aucun signal de commande n'est envoyé au mécanisme de réglage (7).

4. Procédé selon la revendication 3, **caractérisé en ce qu'**après l'interruption du faisceau laser (4, 8), on effectue un nouvel alignement sur le repère de calibrage.

5. Procédé selon la revendication 3, **caractérisé en ce qu'**est produit un message d'erreur optique et/ou acoustique devant être validé par l'utilisateur.

6. Procédé selon une des revendications précédentes, **caractérisé en ce que** le faisceau laser (4, 8) est maintenu en permanence sur le repère de calibrage par des signaux de commande correspondants.

7. Procédé selon une des revendications précédentes, **caractérisé en ce que** les signaux de commande sont transmis du boîtier (6) du récepteur de faisceau laser au boîtier (1) du laser rotatif par radio.

8. Procédé selon la revendication 7, **caractérisé en ce qu'**avant la réalisation des signaux de commande, une vérification d'erreur de transmission est effectuée.

9. Dispositif comportant un laser rotatif (2) entièrement automatique, comportant un mécanisme de réglage (7) pouvant être commandé par l'intermédiaire d'un récepteur de commande à distance (13) pour le réglage du laser rotatif (2), comportant un récepteur de faisceau laser (5) disposé à distance du laser rotatif (2), comportant une électronique d'évaluation (10) raccordée au récepteur de faisceau- laser (5), et comportant un émetteur de commande à distance (12) connecté à l'électronique d'évaluation (10) avec lequel le mécanisme de réglage (7) peut être commandé, moyennant quoi le récepteur de faisceau laser (5) présente un repère de calibrage, et un signal de position peut être produit par l'électronique d'évaluation (10) en fonction de la position du point d'incidence sur le récepteur de faisceau laser (5) d'un faisceau laser (4, 8) émis par le laser rotatif (2), moyennant quoi le signal de position peut être converti par l'intermédiaire du récepteur de commande à distance (13) en un signal de réglage (14) de telle manière que le faisceau laser (4, 8) peut être aligné pour rencontrer le repère de calibrage, **caractérisé en ce que**, pour un calibrage de l'alignement, l'électronique d'évaluation (10) est installée pour générer en fonction de la direction de déplacement du faisceau laser (4, 8) par rapport au récepteur de faisceau laser (5) des signaux de position qui donnent des signaux de réglage (14) prenant en compte l'alignement du récepteur de faisceau laser (5) par rapport au laser rotatif (2).
